# FASCICULE DE BREVET EUROPEEN

(11) **EP 1 481 897 B1**
(45) Date de publication et mention de la délivrance du brevet: **05.10.2005**
(21) Numéro de dépôt: 04291255.0
(22) Date de dépôt: 17.05.2004
(51) Int. Cl.: B64D 27/26

(54) **Suspension arrière de moteur d'avion avec reprise de poussée**
Flugzeugtriebwerksaufhängung mit Schubgestänge
Aircraft engine mount with thrust link

(30) Priorité: 27.05.2003 FR 0306437
(43) Date de publication de la demande: 01.12.2004
(73) Titulaire: SNECMA, 75015 Paris (FR)
(72) Inventeur: Pasquer, Félix Jean-Claude, 77127 Lieusaint (FR); Loewenstein, Philippe, 76490 Saint Arnoult le Bourg (FR); Tesniere, Marc, 91750 Champcueil (FR)
(74) Mandataire: David, Daniel

(56) Documents cités:
- EP-A- 1 136 355
- FR-A- 2 830 515

## Description

La présente invention concerne la suspension des moteurs de propulsion à la structure d'un avion. Elle concerne en particulier une suspension arrière avec reprise de poussée comprenant des moyens visant à maintenir la suspension en fonction en cas de rupture de l'une de ses pièces.

Un moteur de propulsion peut être monté à divers endroits de l'avion en étant accroché à un mât appartenant à la structure de ce dernier. Il peut être suspendu sous les ailes, fixé au fuselage ou monté dans l'empennage par des moyens d'accrochage. Ces moyens d'accrochage ont pour fonction d'assurer la transmission des efforts mécaniques entre le moteur et la structure de l'avion. Les charges à prendre en considération sont orientées selon les trois directions principales. Ce sont notamment le poids du moteur, sa poussée, et les charges aérodynamiques latérales. Les charges à transmettre comprennent aussi la reprise du couple de rotation autour de l'axe du moteur. Ces moyens doivent en outre absorber les déformations subies par le moteur pendant les différentes phases du vol en raison notamment des variations dimensionnelles dues aux dilatations ou contractions thermiques

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter extérieur de la soufflante et la suspension arrière au carter d'échappement du flux primaire.

Selon une configuration connue, l'attache ayant est agencée pour assurer la transmission des efforts mécaniques verticaux et tangentiels entre le moteur et l'avion. L'attache arrière est agencée pour assurer le passage des efforts mécaniques suivant ces mêmes directions, ainsi que la reprise du couple moteur autour de l'axe du turbomoteur et la reprise de poussée. Cette dernière est transmise par l'intermédiaire de deux barres de reprise de poussée accrochées, à l'avant, à la base du carter de soufflante de part et d'autre de l'axe longitudinal, et, à l'arrière, au moyen de suspension arrière du moteur.

La présente invention concerne la suspension arrière avec les moyens de reprise de poussée.

Comme cela est connu, une telle suspension comprend plus précisément une ferrure que l'on fixe à un élément structurel de l'avion, désigné mât, les deux barres ou bielles de reprise de poussée reliées à la ferrure par un palonnier, ainsi qu'un jeu de bielles articulées sur le carter d'échappement du flux primaire. Afin de palier les problèmes survenant en cas de rupture d'une pièce, telle que l'une des bielles ou bien le palonnier, assurant la transmission des efforts de poussée entre le moteur et la structure de l'avion, la suspension est toujours pourvue de moyens de sécurité qui visent à se substituer à la pièce défaillante.

La demande de brevet EP 1136355, qui représente l'art antérieur le plus proche, décrit un dispositif de reprise de poussée avec des moyens formant une liaison avec jeu entre chacune des bielles et la ferrure. Ces moyens assurent la transmission des efforts de poussée en cas de rupture de l'une des pièces du dispositif. La ferrure comprend, sur l'avant, une chape centrale sur laquelle le palonnier est articulé. Les deux bielles sont articulées par des premiers axes de pivotement aux deux extrémités du palonnier. La ferrure comprend comme moyen de sécurité deux oreilles ou pattes latérales supplémentaires, de part et d'autre de la chape centrale. Ces pattes reçoivent les moyens de liaison avec jeu de chacune des bielles de poussée. Les liaisons avec jeu sont constituées chacune d'un axe de pivotement, parallèle au premier axe, traversant à la fois la patte latérale et la chape de la bielle correspondante. L'axe de pivotement est monté avec jeu sur la patte de fixation de la ferrure. En fonctionnement normal les efforts sont transmis par les bielles, le palonnier, la chape centrale de la ferrure, et la ferrure elle-même. En cas de rupture de l'une des bielles par exemple, un déplacement relatif survient qui entraîne l'absorption du jeu de l'autre bielle. La liaison devient rigide et assure la transmission des efforts.

Ce dispositif remplit parfaitement la fonction de sécurité qui lui a été dévolue.

On a proposé d'autres agencements permettant d'assurer la transmission des efforts en cas de rupture accidentelle de l'une des pièces constituant le dispositif de reprise de poussée.

Les brevets EP 564126, EP 879759 ou EP 805108 décrivent également de tels dispositifs avec emploi d'un palonnier reliant les deux bielles à la ferrure arrière par l'intermédiaire d'une articulation centrale. Cette dernière comprend un axe de pivotement orienté radialement par rapport à l'axe longitudinal du moteur. L'axe de pivotement traverse le palonnier et une chape centrale double solidaire de la ferrure. Ces brevets présentent divers moyens pour assurer la transmission de la poussée en cas de fonctionnement anormal.

La demanderesse s'est fixé comme objectif d'améliorer les dispositifs de l'art antérieur tant sur le plan mécanique que sur celui des coûts de fabrication.

Conformément à l'invention, la suspension de turbomoteur à un mât d'avion, comprenant une ferrure agencée pour être fixée au mât, un palonnier fixé dans sa partie centrale à la ferrure par un moyen de liaison avec un axe de pivotement, et deux bielles de reprise de poussée reliées chacune par une extrémité au palonnier et comportant à l'autre extrémité des moyens de fixation au moteur, est caractérisée par le fait que ledit moyen de liaison est constitué sur ladite partie centrale du palonnier par deux branches parallèles distantes l'une de l'autre, et sur la ferrure par une patte de fixation centrale, la patte de fixation et les deux branches étant maintenues ensemble par l'intermédiaire dudit axe de pivotement.

La solution de l'invention par rapport aux réalisations de l'art antérieur rapporté plus haut présente l'avantage d'assurer une sécurité supplémentaire dans le cas où surviendrait une défaillance du palonnier. Si par exemple une fissure se forme dans le palonnier au niveau de l'une des branches de la partie centrale, le chemin de transmission des efforts passe par l'autre branche.

La solution présente également un avantage de fabrication. Les ferrures, en raison de leur géométrie complexe, sont des pièces difficiles à usiner. En remplaçant la chape sur la ferrure par une simple patte monoplan, on diminue les coûts de fabrication. On observe que les solutions de l'art antérieur rapporté plus haut ne prennent pas en considération ce problème.

Avantageusement la partie centrale du palonnier est en forme de bi-plan. En particulier, le palonnier comprend, de part et d'autre de sa partie centrale, une patte de fixation coopérant par un axe de pivotement latéral chacune avec une chape solidaire de l'extrémité arrière des bielles. De cette façon le palonnier présente également une géométrie simple.

Conformément à une autre caractéristique, la ferrure comprend de part et d'autre de la patte de fixation centrale, une patte de fixation latérale coopérant par une liaison en attente avec l'extrémité arrière de chaque bielle. Avantageusement, la liaison en attente est formée par un axe de pivotement monté avec jeu dans son logement. En particulier, les axes de pivotement latéraux et les axes de pivotement des liaisons en attente sont montés sur les mêmes chapes à l'extrémité arrière des bielles.

Ce mode de réalisation des ferrures, est particulièrement avantageux car on peut usiner la patte de fixation centrale et les deux pattes de fixation latérales dans un même plan.

Le coût de fabrication de la ferrure est encore réduit puisque son contour est réalisé en une seule passe de l'outil d'usinage.

On obtient aussi une pièce dont la géométrie assure une tenue mécanique optimale car les phénomènes de concentration des contraintes dans les zones de raccordement d'usinage sont réduits.

D'autres caractéristiques et avantages apparaîtront à la lecture de la description qui suit, accompagnée des dessins en annexe sur lesquels
la figure 1 représente une vue générale du montage d'un moteur au mât d'un avion,
la figure 2 représente en perspective le dispositif de montage du moteur conforme à l'invention,
la figure 3 représente le dispositif de la figure 2 en vue éclatée,
la figure 4 montre une vue en coupe de la figure 2 selon la direction IV-IV.

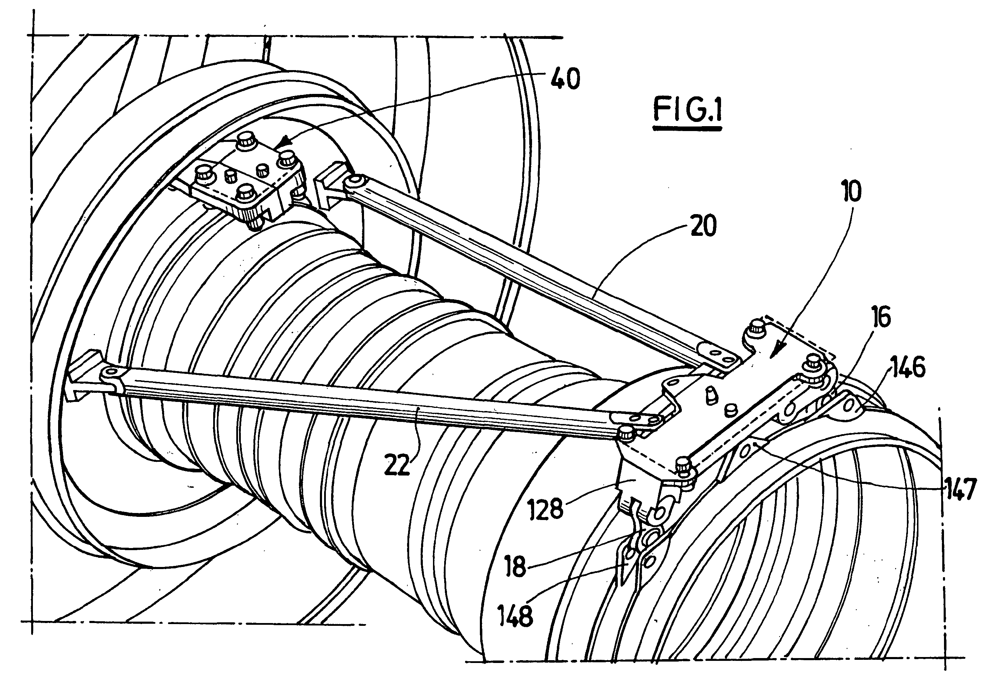

La figure 1 représente, vu de trois-quarts, arrière un turboréacteur 1 équipé de ses moyens d'accrochage à un mât d'avion qui n'est pas représenté. Il peut s'agir notamment de l'accrochage à l'aile d'un avion. Selon ce mode de suspension, le moteur comprend un dispositif d'attache 40 à l'avant du moteur, fixé sur le carter extérieur de la soufflante. Il comporte aussi un moyen d'attache 10 à l'arrière, fixé au carter d'échappement du flux primaire. La reprise de la poussée est assurée par deux barres 20 et 22 disposées longitudinalement de part et d'autre de l'axe du moteur et accrochées à leurs extrémités, d'une part à la base du carter de la soufflante et à l'attache arrière d'autre part.

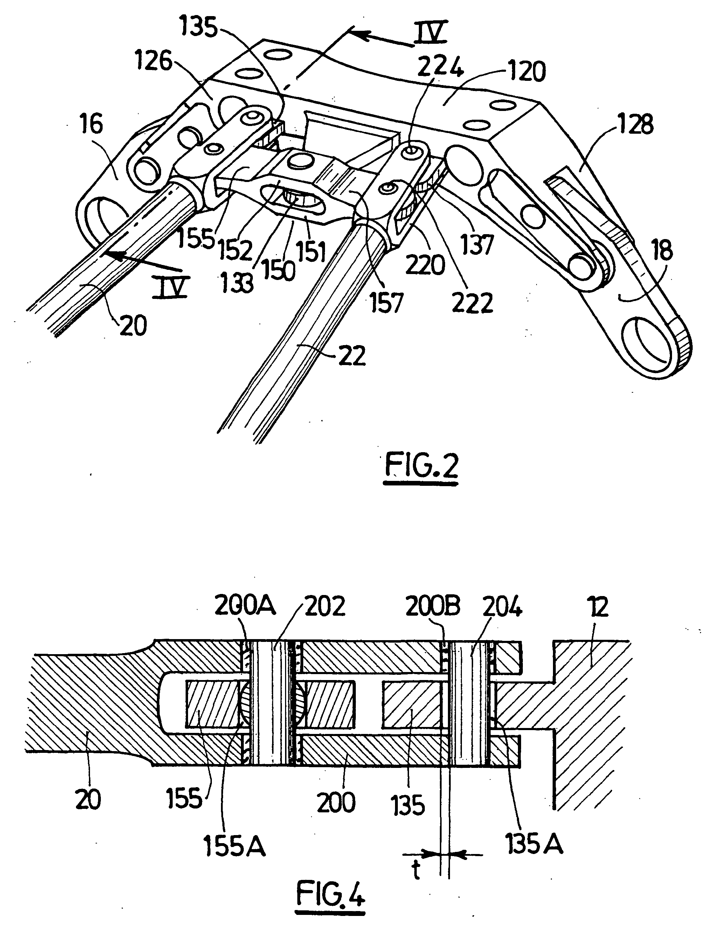

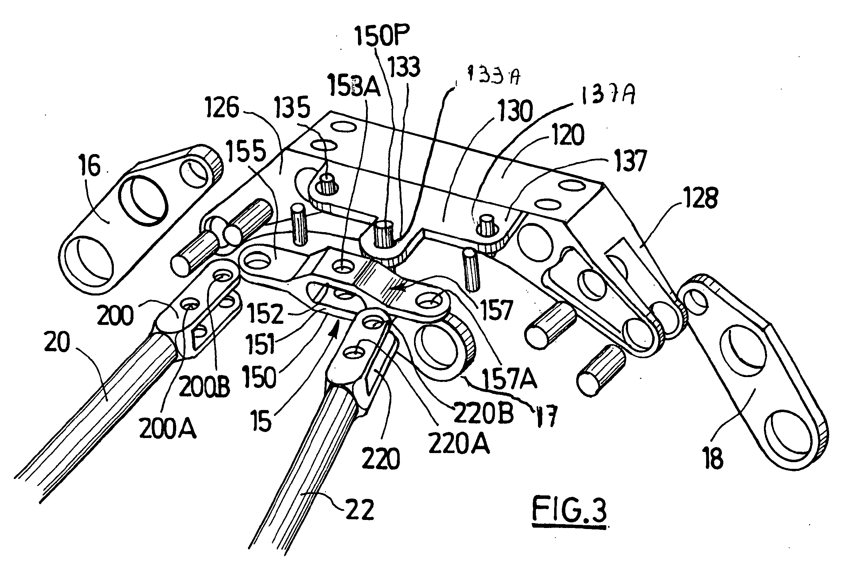

La présente invention concerne l'attache arrière que l'on décrit ci-après en relation avec les figures 2 et 3. La vue éclatée de la figure 2 ne représente pas les douilles de montage des différents axes. L'attache 10 est composée d'une ferrure 12 supérieure, et de trois bielles 16, 17 et 18 reliant la ferrure 12 à des oreilles ou chapes solidaires du carter d'échappement, 146, 147, 148, et disposées circonférentiellement. Eventuellement, ces oreilles sont rassemblées en une ferrure inférieure unique.

La ferrure supérieure est constituée d'une poutre 120 avec, ici, quatre logements pour le passage de boulons ou de vis avec lesquels on rend la ferrure solidaire du mât de l'avion. La poutre est de forme sensiblement rectangulaire ; elle est disposée en sens travers par rapport à l'axe longitudinal du moteur. La poutre se prolonge dans la direction transversale, par deux chapes, 126 et 128, sur lesquelles les bielles, 16 et 18 respectivement, sont articulées. Une troisième chape 127 disposée sous la poutre entre les deux premières assure la liaison avec la bielle 17.

La ferrure 12 comprend à l'avant, l'avant étant défini par rapport à la direction de la poussée du moteur, une pièce 130 plane. Cette pièce 130 définit trois pattes de fixation : 133, 135, et 137. Une patte centrale 133 et deux pattes latérales 135 et 137 de part et de d'autre de la patte centrale. Les trois pattes sont perforées perpendiculairement au plan de la pièce avec les alésages 133A, 135A et 137A. Les deux bielles de reprise de poussée 20 et 22 sont orientées vers l'avant depuis la ferrure 12 de part et d'autre de l'axe longitudinal du moteur. Les extrémités arrières de deux bielles 20 et 22 sont pourvues chacune d'une chape allongée 200 et 220 avec deux alésages, 200A, 200B et 220A, 220B respectivement, en traversant les branches. Les bielles coopèrent avec un palonnier 15 placé en travers parallèlement à la ferrure.

Ce palonnier 15 comprend une partie centrale 150 avec deux branches 151 et 152 parallèles, distantes l'une de l'autre de façon à former un bi-plan. Ce bi-plan est traversé par un alésage 150A. Le palonnier est relié à la ferrure par le moyen de liaison constitué par un axe de pivotement traversant les deux branches 151, 152 et la patte centrale disposée entre elles.

Le palonnier comprend également deux pattes 155 et 157 de part et d'autre de ce bi-plan 150 chacune avec un alésage, 155A et 157A . Les axes des alésages des deux pattes et du bi-plan sont parallèles entre eux.

Les deux chapes 200 et 220 relient les bielles 20 et 22 à la fois au palonnier et à la ferrure par des axes de pivotement logés dans les alésages. Cependant seule la liaison avec le palonnier est active. Afin d'assurer la sécurité du transfert des efforts entre le moteur et la structure de l'avion, la liaison entre les deux bielles 20 et 22 et les pattes de fixation latérales de la ferrure 135 et 137 est en attente. On désigne par ce terme une liaison qui en fonctionnement normal du dispositif de reprise de poussée reste inactive et ne transmet aucune force. Lorsque survient une rupture accidentelle, la liaison devient active et se substitue à la pièce défaillante.

Avantageusement la liaison en attente est assurée par un axe de pivotement traversant les deux branches de la chape et la patte de fixation, monté avec jeu. Tant que le jeu n'est pas absorbé par un mouvement relatif entre la chape et la patte aucun effort n'est transmis de l'une à l'autre.

Cela apparaît sur la figure 4 qui représente une coupe des liaisons de la bielle 20 avec le palonnier et la ferrure. La chape 200 relie la bielle 20 à la patte 155 par un axe de pivotement 202. La douille sur la patte 155 dans l'alésage 155A est à surface sphérique pour former une rotule. La chape 200 relie la bielle à la patte 135 de la ferrure par un deuxième axe de pivotement 204. Celui-ci est monté avec jeu dans l'alésage 135 A. Ce jeu est suffisant pour qu'aucun effort ne soit transmis par cette liaison en fonctionnement normal de la suspension.

De même la bielle 22, est reliée à la ferrure par une chape 220 à la patte 157 par un axe de pivotement 222 monté avec rotule comme l'axe 202. La chape 220 relie la bielle à la patte latérale 137 de la ferrure par une deuxième axe de pivotement 224. Celui-ci est monté avec jeu dans l'alésage 137A de la patte 137. Ce jeu est de préférence identique à celui qui est ménagé entre l'ace 204 et son logement dans l'alésage 135A.

Le dispositif fonctionne de la façon suivante.

En fonctionnement normal les efforts de traction exercés par le moteur sont répartis entre les deux bielles 20 et 22 qui les transmettent au palonnier par les liaisons articulées. En raison du montage des axes de pivotement sur le palonnier, seuls les efforts de traction et de compression selon la direction des bielles sont transmis. Le palonnier 15 transmet à son tour les efforts à la ferrure par le moyen de liaison constitué par l'axe de pivotement 150P traversant le bi-plan 151-152 et la patte centrale 133.

Si une bielle vient à rompre, l'effort exercé par l'autre bielle entraîne un mouvement de rotation autour du pivot 150/133 et l'absorption du jeu au niveau de la patte correspondante. La liaison devient rigide et se substitue à la liaison défaillante.

Si le palonnier ou la liaison par la patte centrale vient à rompre, les deux bielles transmettent alors la charge directement à la ferrure par les deux pattes latérales.

## Revendications

1. Suspension de turbomoteur à un mât d'avion, comprenant une ferrure (12) agencée pour être fixée au mât, un palonnier (15) fixé dans sa partie centrale (150) à la ferrure par un moyen de liaison avec un axe de pivotement (150P), et deux bielles de reprise de poussée (20, 22) reliées chacune par une extrémité au palonnier et comportant à l'autre extrémité des moyens de fixation au moteur, **caractérisée par le fait que** ledit moyen de liaison est constitué sur ladite partie centrale (150) du palonnier par deux branches (151, 152) parallèles distantes l'une de l'autre, et sur la ferrure par une patte de fixation centrale (133), la patte de fixation et les deux branches étant maintenues ensemble par l'intermédiaire dudit axe de pivotement (150P)

2. Suspension selon la revendication 1, dont la partie centrale (150) est en forme de bi-plan

3. Suspension selon la revendication 1 ou 2, dont le palonnier (15) comprend, de part et d'autre de sa partie centrale (150), une patte de fixation (155, 157) coopérant, par un axe de pivotement latéral, chacune avec une chape (200, 220) à l'extrémité arrière des bielles (20, 22).

4. Suspension selon la revendication 1, 2 ou 3, dont la ferrure (12) comprend de part et d'autre de la patte de fixation centrale (133), une patte de fixation latérale (135, 137) coopérant par une liaison en attente avec l'extrémité arrière de chaque bielle (20, 22).

5. Suspension selon la revendication 4, dont la liaison en attente est formée par un axe de pivotement (204, 224) monté avec jeu dans son logement.

6. Suspension selon l'une des revendications 2 à 5, dont les axes de pivotement latéraux (202, 222) et les axes (204, 224) des liaisons en attente sont montés sur les mêmes chapes à l'extrémité arrière des bielles.

## Patentansprüche

1. Triebwerks-Aufhängung an einem Flugzeug-Stiel, umfassend einen zum Befestigen am Stiel geeigneten Beschlag (12), eine Traverse (15), welche in ihrem Zentralabschnitt (150) mittels eines VerbindungsMittels mit einer Schwenkachse (150P) an dem Beschlag befestigt ist, und zwei Schub-Aufnahme-Stangen (20,22), von welchen jede an einem Ende mit der Traverse verbunden ist, und am anderen Ende Vorrichtungen zum Befestigen am Motor umfasst, **dadurch gekennzeichnet, dass** diese VerbindungsVorrichtung in dem Zentralabschnitt (150) der Traverse mittels zweier paralleler, voneinander mit Abstand versehener Zweige (151,152), und an dem Beschlag mittels einer zentralen Befestigungs-Lasche (133) ausgebildet ist, wobei die Befestigungs-Lasche und die zwei Zweige mittels der Schwenk-Achse (150P) zusammengehalten werden.

2. Aufhängung gemäß Anspruch 1, wobei der Zentralabschnitt (150) eine Zwei-Ebenen-Form aufweist.

3. Aufhängung gemäß Anspruch 1 oder 2, wobei die Traverse (15) an beiden Seiten seines Zentralab-schnitts (150) eine Befestigungs-Lasche (155,157) umfasst, welche mittels einer Lateral-Schwenk-Achse, jeweils mit einer Gabel (200,220) am hinteren Ende der Stangen (20,22) zusammenwirkt.

4. Aufhängung gemäß Anspruch 1, 2 oder 3, wobei der Beschlag (12) auf beiden Seiten der zentralen Befestigungs-Lasche (133) eine seitliche Befestigungs-Lasche (135,137) umfasst, welche mittels einer Stift-Verbindung mit dem hinteren Ende jeder Stange (20,22) zusammenwirkt.

5. Aufhängung gemäß Anspruch 4, wobei die Stift-Verbindung mittels einer mit Spiel in ihrer Aufnahme montierten Schwenk-Achse (204,224) gebildet wird.

6. Aufhängung gemäß einem der Ansprüche 2 bis 5, wobei die Lateral-Schwenk-Achsen (202,222) und die Achsen (204,224) der Stift-Verbindungen an den gleichen Gabeln am hinteren Ende der Stangen befestigt sind.

## Claims

1. A suspension of the turbo engine to an aircraft pylon, including a fitting (12) arranged to be attached to a pylon, a lever (15) fastened in its central portion (150) to the fitting via a linking means with a pivot pin (150P), and two thrust rods (20, 22) each connected by an end to the lever and including at the other end of the fastening means to the engine, **characterised in that** said linking means is composed on said central portion (150) of the lever, of two parallel branches (151, 152) apart from one another, and on the fitting, of a central fastening tab (133), whereas the fastening tab and both branches are held together by dint of said pivot pin (150P).

2. A suspension according to claim 1, whereof the central portion (150) is in the form of a biplane.

3. A suspension according to claim 1 or 2, whereof the lever (15) includes on both sides of its central portion (150), a fastening tab (155, 157) co-operating with a lateral pivot pin, each with a yoke (200, 220) at the rear end of the rods (20, 22).

4. A suspension according to claim 1, 2 or 3, whereof the fitting (12) includes on both sides of the central fastening tab (133), a lateral fastening tab (135, 137) co-operating via a standby connection with the rear end of each rod (20, 22).

5. A suspension according to claim 4, whereof the standby connection is formed of a pivot pin (204, 224) installed with a certain clearance in its housing.

6. A suspension according to one of the claims 2 to 5, whereof the lateral pivot pins (202, 222) and the pins (204, 224) of the standby connections are installed on the same yokes at the rear end of the rods.
